# FASCICULE DE BREVET EUROPEEN

(11) **EP 3 688 300 B1**
(45) Date de publication et mention de la délivrance du brevet: **25.08.2021**
(21) Numéro de dépôt: 18786850.0
(22) Date de dépôt: 26.09.2018
(51) Int. Cl.: F02K 9/60

(54) **DISPOSITIF AMELIORE D'AMORTISSEMENT D'ENGINS SPATIAUX**
VERBESSERTE VORRICHTUNG ZUM DÄMPFEN VON RAUMFAHRZEUGEN
IMPROVED DEVICE FOR DAMPING SPACECRAFT

(30) Priorité: 26.09.2017 FR 1758915
(43) Date de publication de la demande: 05.08.2020
(73) Titulaire: ArianeGroup SAS, 75015 Paris (FR)
(72) Inventeur: LE GONIDEC, Serge, 27200 Vernon (FR); PYRE, Alain, 27950 Saint-Just (FR); NOMERANGE, Philippe, 78300 Poissy (FR)
(74) Mandataire: Cabinet Beau de Loménie
(86) Numéro de dépôt international: PCT/FR2018/052368
(87) Numéro de publication internationale: WO 2019/063938

(56) Documents cités:
- FR-A1- 2 952 034
- US-A1- 2006 076 540

## Description

### DOMAINE DE L'INVENTION

L'invention se rapporte au domaine des moteurs de fusée et de satellites, et plus particulièrement à l'amortissement des vibrations engendrées par ces moteurs.

### ETAT DE LA TECHNIQUE ANTERIEURE

Actuellement, la manœuvre des engins spatiaux pour l'orientation de la poussée est assurée par des vérins qui peuvent être hydrauliques ou électriques. FR 2 952 034 A1 et US 2006/076540 A1 décrivent des exemples de tels dispositifs d'actionnement. La fréquence des vibrations engendrées par le moteur en fonctionnement peut varier selon l'orientation du moteur, et se répercuter dans la structure de la fusée ou du satellite. Selon les fréquences rencontrées, ces vibrations peuvent engendrer une usure mécanique de cette structure, et détériorer celle-ci. Les dispositifs permettant d'absorber ces vibrations sont souvent complexes et coûteux, et nécessitent un nombre d'éléments importants. Par ailleurs, ils ne permettent pas de s'adapter aux variations de fréquences de vibration. Il existe donc un besoin pour un dispositif d'amortissement mécanique de moteur de fusée ou de satellite permettant de limiter les inconvénients mentionnés ci-dessus.

### PRESENTATION DE L'INVENTION

Le présent exposé concerne un ensemble comportant :
- un support configuré pour être fixé à un engin spatial,
- un propulseur,
- un dispositif d'amortissement, le dispositif d'amortissement comportant au moins deux électrodes et au moins un polymère électro-actif disposé entre les deux électrodes, le dispositif d'amortissement étant intercalé entre le support et le propulseur.

Dans le présent exposé, l'engin spatial peut être une fusée ou un satellite.

Dans certains modes de réalisation, le propulseur est de type chimique, comportant :
- une chambre de combustion portée par le support,
- un divergent fixé à la chambre de combustion en aval de la chambre de combustion,

Dans le présent exposé, les termes « amont » et « aval » s'entendent par rapport au sens d'éjection des gaz à l'extérieur du divergent, autrement dit au sens opposé à celui de la poussée du moteur.

De ce point de vue, la chambre de combustion est disposée en aval du support, en étant portée par celui-ci, et le divergent est lui-même fixé à la chambre de combustion, en aval de celle-ci.

On entend par « disposé entre » que les électrodes sont disposées de part et d'autre du polymère électro-actif, en étant en contact avec celui-ci. Le polymère électro-actif est donc pris en sandwich entre deux électrodes, ces dernières pouvant avoir une forme correspondant à celle du polymère électro-actif. Ainsi, lorsque les électrodes sont soumises à une différence de potentiel électrique, un champ électrique traverse le polymère électro-actif, provoquant la déformation ou une modification de raideur de celui-ci.

Par ailleurs, le support est un élément appartenant au corps de l'engin spatial, en étant fixé à celui-ci de manière à être immobile par rapport à celui-ci, c'est-à-dire à être solidaire en déplacement avec l'engin spatial. De même, le divergent est fixé à la chambre de combustion de manière à être immobile par rapport à celle-ci. Par conséquent, la chambre de combustion et le divergent peuvent se déplacer en un seul bloc par rapport au support, et donc par rapport à l'engin spatial. Le dispositif d'amortissement permet ce déplacement simultanée de la chambre de combustion et du divergent.

Ce dispositif d'amortissement comprend au moins un polymère électro-actif. On entend par polymère électro-actifs des polymères dont au moins une dimension, ou encore la raideur, change lorsqu'ils sont stimulés par un champ électrique. Dans le présent exposé, les polymères électro-actifs peuvent être des blocs dont l'épaisseur est considérée suivant la direction amont-aval, et pouvant prendre une forme parallélépipédique, cylindrique, ou toute autre forme.

On entend par « intercalé entre » que le dispositif d'amortissement est disposé entre le support et le propulseur, de manière à être lié, directement ou indirectement, audit support et audit propulseur. Plus précisément, lorsque le dispositif d'amortissement comporte un bloc de polymère électro-actif et deux électrodes, l'une des deux électrodes est liée au support, et l'autre des deux électrodes est liée au propulseur. Ainsi, lorsqu'un champ électrique est appliqué au bloc de polymère électro-actif entre les deux électrodes, la déformation du bloc de polymère électro-actif, notamment l'augmentation de son épaisseur, provoque un mouvement du propulseur. En effet, une des extrémités du dispositif d'amortissement étant fixée au support, donc à l'engin spatial, la déformation du bloc de polymère électro-actif provoque le déplacement du propulseur. Par ailleurs, le bloc de polymère possède une certaine raideur, cette dernière variant en fonction des variations de son épaisseur. Par conséquent, le bloc de polymère peut agir comme un ressort de raideur variable, amortissant les vibrations du moteur.

L'utilisation de ces polymères électro-actifs pour l'amortissement des vibrations du moteur de l'engin spatial permet de limiter le recours aux dispositifs usuels plus complexes et plus nombreux, et permet de pouvoir s'adapter aux variations des fréquences de vibrations du moteur. Par ailleurs, ce dispositif permet d'isoler le moteur du reste de l'engin spatial limitant par conséquent, par sa présence, la transmission des vibrations, ou encore des chocs, du moteur à l'engin.

Dans certains modes de réalisation, le propulseur est de type électrique.

Dans certains modes de réalisation, le dispositif d'amortissement comporte trois électrodes et deux polymères électro-actifs empilés les uns sur les autres, de sorte que chaque polymère électro-actif soit intercalé entre deux électrodes.

Il est ainsi possible d'obtenir une plus grande amplitude de déplacements ou de raideurs du dispositif d'amortissement en alimentant électriquement les deux polymères électro-actifs, et ainsi de s'adapter plus efficacement aux variations de fréquences de vibrations du moteur.

Dans certains modes de réalisation, les électrodes sont alimentées électriquement indépendamment les unes des autres

Il est ainsi possible d'alimenter électriquement les polymères électro-actifs indépendamment les uns des autres, et ainsi de s'adapter encore plus efficacement aux variations de fréquences de vibrations du moteur.

Dans certains modes de réalisation, l'intensité du champ électrique appliqué au dispositif d'amortissement est modulable.

Il est ainsi possible d'ajuster plus finement les fréquences de déplacement et l'amortissement du dispositif d'amortissement en les adaptant aux variations de fréquences de vibrations du moteur.

Dans certains modes de réalisation, l'épaisseur du au moins un polymère électro-actif est uniforme.

Dans certains modes de réalisation, la raideur du au moins un polymère électro-actif est uniforme.

Par uniforme, on comprend que, à un instant donné, l'épaisseur ou la raideur du polymère électro-actif a la même valeur, quel que soit le point considéré. Autrement dit, avant déformation par exemple, suivant n'importe quelle direction perpendiculaire à la direction amont-aval, l'épaisseur du polymère électro-actif est constante. De même, après déformation, l'épaisseur ou la raideur du polymère électro-actif est également constante, mais de valeur différente que celle avant déformation. Cela permet d'engendrer un déplacement uniforme du propulseur, et donc de ne pas modifier l'orientation de la poussée de l'engin spatial lors de la déformation du dispositif d'amortissement.

Dans certains modes de réalisation, le dispositif d'amortissement comporte une première surface de liaison et le propulseur comporte une deuxième surface de liaison, la première et la deuxième surface de liaison étant en regard l'une par rapport à l'autre, la première surface de liaison étant supérieure ou égale à la deuxième surface de liaison.

Lorsque le dispositif d'amortissement est intercalé entre le support et le propulseur, la première surface de liaison peut être liée directement ou indirectement à la deuxième surface de liaison. Ainsi, lorsque le ou les polymères électro-actifs du dispositif d'amortissement sont alimentés électriquement, leur déformation engendre un déplacement de la première surface de liaison, et donc un déplacement du propulseur par l'intermédiaire de la deuxième surface de liaison. Compte tenu du fait que la première surface de liaison est supérieure ou égale à la deuxième surface de liaison, et que l'épaisseur ou la raideur du ou des polymères électro-actifs reste constante, le déplacement du propulseur est donc uniforme, et l'orientation de la poussée de l'engin spatial lors de la déformation du dispositif d'amortissement reste constante.

Dans certains modes de réalisation, l'ensemble est configuré pour être utilisé sur des engins spatiaux de poussée comprise entre 0.001 N et 500 N.

Le présent exposé concerne également une fusée comportant un ensemble selon l'une quelconque des revendications précédentes.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- les figure 1A et 1B représentent une vue schématique d'un ensemble selon un premier mode de réalisation ;
- la figure 2A représente l'ensemble de la figure 1 lorsqu'un actionneur est activé, et la figure 2B représente un état activé et un état désactivé d'un polymère électro-actif ;
- les figures 3A, 3B, 3C représentent schématiquement différentes configurations d'actionneurs comprenant des polymères électro-actifs ;
- les figures 4A, 4B et 4C représentent respectivement un ensemble selon un deuxième, un troisième et un quatrième mode de réalisation ;
- la figure 5 représente une vue en perspective d'un dispositif d'amortissement.

### DESCRIPTION DETAILLEE D'EXEMPLES DE REALISATION

Dans la suite de l'exposé, toutes références à une « fusée » ou à un « moteur de fusée » est également applicable à un satellite. De plus, la suite de l'exposé fait référence à un propulseur de type chimique, comportant une chambre de combustion et un divergent. Néanmoins, le dispositif d'orientation objet du présent exposé est également applicable à un propulseur de type électrique, par exemple plasmique ou ionique. Dans ce cas, la chambre d'ionisation correspond à la chambre de combustion, et les deux grilles chargées négativement et positivement à l'extrémité de la chambre d'ionisation, correspondent au divergent.

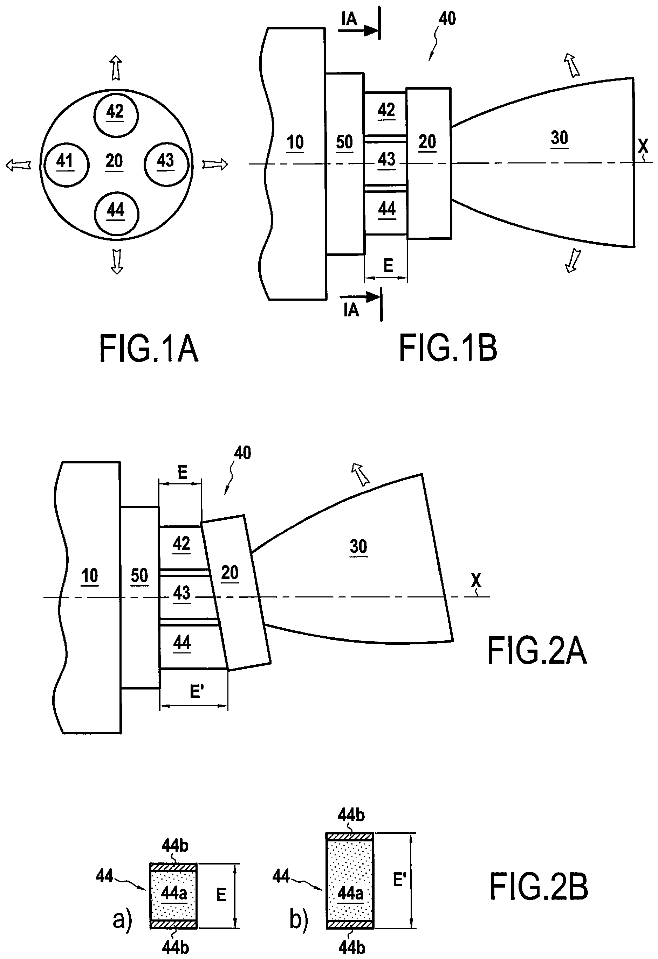

Un ensemble selon un premier mode de réalisation va être décrit en référence aux figures 1A, 1B, 2A et 2B. L'ensemble comporte un support 10 rigide appartenant au corps de la fusée (non représentée), solidaire de celle-ci et immobile par rapport à celle-ci, et un moteur de fusée comportant une chambre de combustion 20, et un divergent 30 fixé à la chambre de combustion 20. Le support 10 rigide peut être fixé à un lanceur spatial ou un satellite. Le moteur de la fusée repose sur le support 10 mais est mobile par rapport au support 10, en étant articulé par rapport au support 10, par exemple, par des liaisons pivots ou des rotules, par exemple. L'orientation du moteur par rapport à la fusée peut ainsi être modifiée. Il est ainsi possible de faire varier l'orientation de la poussée du moteur, et donc de modifier la trajectoire de la fusée. L'orientation de la poussée est déterminée par l'angle formé entre l'axe de révolution du divergent et l'axe X, correspondant à l'axe principal. Ainsi, un angle nul correspond à une trajectoire rectiligne, pour laquelle l'angle entre l'axe de révolution du divergent et l'axe X est nul (cf. fig. 1B).

L'ensemble comporte en outre un dispositif d'orientation 40 permettant de modifier l'orientation du moteur. Dans l'exemple de la figure 1B, le dispositif d'orientation 40 est intercalé entre le support 10 rigide et la chambre de combustion 20, en étant pris en sandwich entre le support 10 rigide et la chambre de combustion 20. Le dispositif d'orientation 40 comporte quatre actionneurs 41, 42, 43, 44. Les actionneurs comprennent des électrodes et des blocs de polymère électro-actif, disposés chacun entre deux électrodes. Les électrodes 44b de l'actionneur 44, par exemple, peuvent être des plaques métalliques prenant deux à deux en sandwich un bloc de polymère électro-actif 44a. La forme de ce dernier peut varier lorsqu'il est soumis à un champ électrique généré entre les deux électrodes 44b entre lesquelles il se trouve.

Plus précisément, supposons que chaque actionneur ait une épaisseur initiale E, l'épaisseur étant considérée suivant la direction de l'axe X lorsque l'actionneur 44 est intercalé entre le support 10 rigide et la chambre de combustion 20. Lorsque les blocs de polymère électro-actif de l'actionneur sont soumis à un champ électrique, chaque bloc se déforme de manière à ce que l'épaisseur totale E de l'actionneur augmente jusqu'à une épaisseur E'. La valeur de E' dépend de l'intensité du champ appliqué, et donc de la différence de potentiel appliquée entre les électrodes, ainsi que du type de polymère électro-actif. Par exemple, la vue a) sur la figure 2B illustre l'actionneur 44 à l'état non activé, dans lequel aucun courant ne traverse le bloc de polymère électro-actif 44a entre les deux électrodes 44b. L'épaisseur de l'actionneur 44 est alors E. La vue b) sur la figure 2B illustre l'actionneur 44 à l'état activé. Lorsqu'un courant électrique est appliqué entre les deux électrodes 44b, à travers le bloc 44a, ce dernier se déforme alors, son épaisseur augmentant jusqu'à une valeur E'. Ainsi, l'augmentation de l'épaisseur de l'actionneur pousse le moteur et incline ce dernier en conséquence. L'orientation est également possible, par un mécanisme analogue, si l'épaisseur de l'actionneur diminue.

Les blocs de polymère électro-actif peuvent être de type ionique (ou « Ionic EAP » en anglais). Ces polymères se basent sur une diffusion d'ions ou de molécules au sein du matériau. Les actionneurs utilisant des polymères ioniques ont généralement la même structure qu'une pile, soit deux électrodes séparées par un électrolyte. Ces polymères électro-actifs peuvent se présenter en pratique sous forme de "gel électrolyte" ou de "polymère liquide". Ce type de polymères consiste en un réseau de polymères réticulés et un fluide situé entre les chaines polymères. Les gels polymères sont des solides très souples qui peuvent présenter de grandes déformations via des phénomènes de gonflement induits par la mobilité des ions. En outre, dans ce cas, lorsque l'alimentation électrique de l'actionneur est coupée, ce dernier retrouve sa forme initiale, permettant au moteur de retrouver son orientation initiale.

De manière alternative, les blocs de polymère électro-actif peuvent être de type électronique (ou «Electronic EAP» en anglais). Ces polymères sont des "polymères solides" (généralement élastomères, c'est-à-dire à température de transition vitreuse nettement inférieure à la température d'utilisation), disposés en sandwich entre deux électrodes et activés par un champ électrique externe. Ils présentent l'avantage de forte déformation et une réponse rapide. Par contre, le champ électrique requis pour ces performances est élevé et proche du seuil de claquage diélectrique ou de décomposition de la matrice polymère. En outre, dans ce cas, lorsque l'alimentation électrique de l'actionneur est coupée, ce dernier conserve sa forme après déformation, et ne nécessite pas d'apport d'énergie supplémentaire pour maintenir cette position.

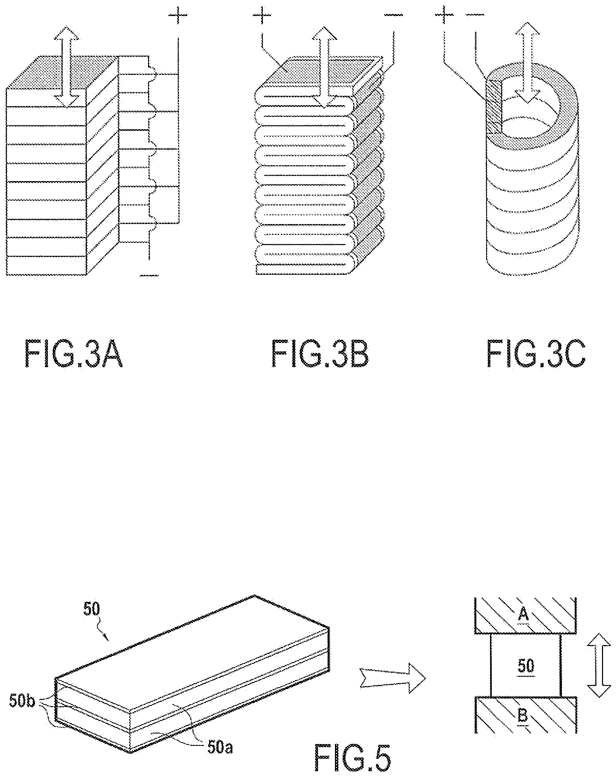

Un actionneur comporte au moins un bloc de polymère électro-actif et au moins deux électrodes, mais peut comporter une pluralité de blocs de polymère électro-actif et d'électrodes empilés les uns sur les autres. Pour ce faire, plusieurs modes d'empilement sont possibles. La figure 3A illustre une configuration multicouche, dans laquelle une pluralité de blocs de polymères électro-actifs et d'électrodes analogues à ceux de la figure 2B sont empilés successivement les uns sur les autres, chaque bloc de polymère étant intercalé entre une électrode chargée positivement et une électrode chargée négativement. La figure 3B illustre une configuration « pliée », dans laquelle un film polymère électro-actif est replié plusieurs fois sur lui-même, une électrode étant intercalée entre chaque pli. La figure 3C illustre une configuration « hélicoïdale », dans laquelle deux couches de polymère électro-actif sont enroulées en hélice. Ces types de structure permettent aux actionneurs de se déformer d'environ 15% par rapport à leur forme initiale, ces derniers pouvant fournir une contrainte d'environ 20 N/mm².

Par ailleurs, si l'on considère dans cet exemple que la section de la chambre de combustion 20 est de forme circulaire, les quatre actionneurs 41, 42, 43 et 44 sont répartis à intervalles réguliers sur la circonférence la chambre de combustion 20, de manière à être le plus éloigné possible du centre de la chambre de combustion (cf. figure 1A). L'effort à fournir pour déplacer l'ensemble du moteur et orienter ce dernier est ainsi moins important. Par ailleurs, chaque actionneur 41, 42, 43 et 44 peut être alimenté électriquement indépendamment des autres. Ainsi, en alimentant électriquement un ou plusieurs actionneurs, et en ajustant la tension dans chacun d'eux, il est possible de régler précisément l'orientation du moteur par rapport à la fusée.

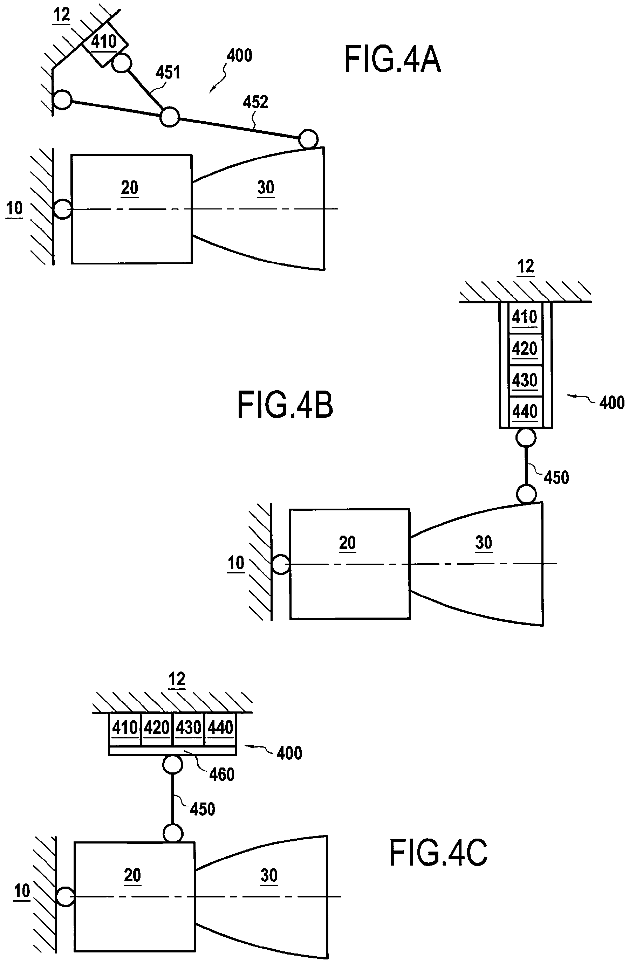

La figure 4A illustre un ensemble selon un deuxième mode de réalisation. Dans ce mode de réalisation, un dispositif d'orientation 400 comprend un actionneur 410, et deux bras d'orientation 451 et 452 articulés entre eux. L'actionneur 410, pouvant être de n'importe quel type, tel que ceux décrits précédemment, est fixé à une structure rigide 12. La structure rigide 12 est un élément fixe de la fusée ou du satellite, excentré par rapport au moteur, donc par rapport à la chambre de combustion 20 et au divergent 30. Un premier bras d'orientation 451 rigide comporte une première extrémité fixée à l'actionneur 410, et une deuxième extrémité fixée à un deuxième bras d'orientation 452 rigide. Ce dernier comporte une première extrémité fixée à la fusée, par exemple au support 10, et une deuxième extrémité fixée au divergent 30. La liaison entre cette deuxième extrémité du deuxième bras d'orientation 452 et le divergent 30 est de préférence proche de l'extrémité aval du divergent, de manière à minimiser les efforts nécessaires pour orienter ce dernier. De manière alternative, la deuxième extrémité du deuxième bras 452 peut être fixée à la chambre de combustion 20. Ainsi, lorsque l'actionneur 410 est activé, la déformation du bloc de polymère électro-actif qu'il comporte engendre un déplacement du premier bras d'orientation 451, lui-même agissant sur le deuxième bras rigide 452 par un effet levier. Le déplacement engendré par l'actionneur 410 est finalement transmis jusqu'au divergent 30 (ou tout autre structure rigide liée à la chambre de combustion), ce dernier étant ainsi orienté en conséquence, par rapport à l'axe X.

La figure 4B illustre un ensemble selon un troisième mode de réalisation. Dans ce mode de réalisation, un dispositif d'orientation 400 comprend quatre actionneurs 410, 420, 430 et 440, disposés en série, et un bras rigide 450. Plus précisément, un premier actionneur 410 est porté par la structure rigide 12, un deuxième actionneur 420 est porté par le premier actionneur, un troisième actionneur 430 est porté par le deuxième actionneur, et un quatrième actionneur 440 est porté par le troisième actionneur. Les quatre actionneurs sont ainsi empilés les uns sur les autres. Le bras rigide 450 comporte une première extrémité fixée au quatrième actionneur 440, et une deuxième extrémité fixée au divergent 30. La liaison entre cette deuxième extrémité du bras 450 et le divergent 30 est de préférence proche de l'extrémité aval du divergent, de manière à minimiser les efforts nécessaires pour orienter ce dernier. De manière alternative, la deuxième extrémité du bras 450 peut être fixée à la chambre de combustion 20. Ainsi, lorsqu'un ou plusieurs des actionneurs 410, 420, 430 et 440 sont activés, la déformation des blocs de polymère électro-actif qu'ils comportent engendre un déplacement du bras rigide 450, lui-même agissant sur le divergent 30. Le déplacement engendré par l'ensemble des actionneurs est ainsi transmis au divergent 30, ce dernier étant donc orienté en conséquence, par rapport à l'axe X. Dans cette configuration, le déplacement engendré peut être important.

Bien que dans cet exemple, quatre actionneurs sont représentés, des nombres différents d'actionneurs sont envisageables, par exemple trois actionneurs, cinq ou davantage.

La figure 4C illustre un ensemble selon un quatrième mode de réalisation. Dans ce mode de réalisation, un dispositif d'orientation 400 comprend quatre actionneurs 410, 420, 430 et 440, disposés en parallèle, un bras d'orientation 450 rigide et un élément rigide 460. Plus précisément, un premier actionneur 410, un deuxième actionneur 420, un troisième actionneur 430, et un quatrième actionneur 440 sont chacun porté par la structure rigide 12, et sont disposés les uns à côté des autres. L'élément rigide 460 est porté par l'ensemble des actionneurs en parallèle, et recouvre ces derniers du côté opposé de la structure rigide 12 par rapport aux actionneurs 410, 420, 430 et 440. Le bras d'orientation 450 rigide comporte une première extrémité fixée à l'élément rigide 460, et une deuxième extrémité fixée à la chambre de combustion 20. De manière alternative, la deuxième extrémité du bras 450 peut être fixée au divergent 30. Ainsi, lorsque les actionneurs 410, 420, 430 et 440 sont activés, la déformation des blocs de polymère électro-actif qu'ils comportent engendre un déplacement de l'élément rigide 460, lui-même agissant sur le bras d'orientation 450. Le déplacement engendré par l'ensemble des actionneurs est ainsi transmis à la chambre de combustion, cette dernière étant ainsi orientée en conséquence, par rapport à l'axe X. Dans cette configuration, l'effort engendré par les quatre actionneurs en parallèle peut être important.

Bien que dans cet exemple, quatre actionneurs sont représentés, des nombres différents d'actionneurs sont envisageables, par exemple trois actionneurs, cinq ou davantage.

En outre, dans l'exemple de la figure 1, relatif au premier mode de réalisation, l'ensemble comporte également un dispositif d'amortissement 50, intercalé entre le support 10 et le moteur, en étant pris en sandwich entre le support 10 rigide et la chambre de combustion 20. Bien qu'il ne soit pas illustré sur les figures 4A, 4B et 4C, le dispositif d'amortissement peut également être intercalé entre le support 10 et la chambre de combustion 20 dans les deuxième, troisième et quatrième modes de réalisation.

Dans la suite de la description relative au dispositif d'amortissement 50, nous nous référerons néanmoins à la figure 1, dans laquelle le dispositif d'amortissement 50 est intercalé entre le support 10 rigide et le dispositif d'orientation 40, et la figure 5.

Le dispositif d'amortissement 50 comporte trois plaques métalliques rigides 50b, et deux blocs de polymère électro-actif 50a, chacun des blocs de polymère électro-actif étant intercalé entre deux plaques métalliques 50b. Les plaques métalliques 50b et les blocs de polymère électro-actif 50a sont donc empilés successivement et en série les uns sur les autres. Alternativement, le dispositif d'amortissement 50 peut comporter un unique bloc de polymère électro-actif 50a intercalé entre deux plaques métalliques 50b, ou trois, ou davantage, blocs de polymère électro-actif 50a, chacun étant intercalés entre deux plaques métalliques 50b.

La forme et la raideur des blocs de polymère électro-actif 50a peut varier lorsqu'ils sont traversés par un champ électrique. Les plaques métalliques 50b agissent comme des électrodes, en étant chacune alimentée électriquement. Ainsi, lorsqu'un champ électrique est appliqué entre deux plaques métalliques 50b, celui-ci est transmis à travers le bloc de polymère électro-actif 50a disposé entre ces deux plaques métalliques 50b, ce dernier se déformant ou se raidissant donc sous l'effet de ce champ électrique.

La surface occupée par le dispositif d'amortissement 50 est telle qu'elle recouvre entièrement la surface occupée par la chambre de combustion 20. Ainsi, lorsque le dispositif d'amortissement 50 est alimenté électriquement, et que les blocs de polymère électro-actif 50a qu'il comporte se déforment, l'épaisseur du dispositif d'amortissement 50 augmente de manière à pousser de manière uniforme la chambre de combustion 20. Le dispositif d'amortissement 50 n'influe donc pas sur l'orientation du divergent 30, cette fonction étant assurée par le dispositif d'orientation 40. En revanche, les variations de l'épaisseur ou de raideur du dispositif d'amortissement 50 permettent d'accentuer l'effet d'amortissement de ce dispositif et donc d'améliorer l'absorption des vibrations engendrées par le moteur. La vue de droite de la figure 5 illustre schématiquement deux objets A et B séparé par un dispositif d'amortissement 50. Les vibrations engendrées par l'objet B, par exemple, peuvent être absorbées par le dispositif d'amortissement 50, ce dernier comportant au moins un bloc de polymère électro-actif, agissant comme un amortisseur mécanique, limitant ainsi la transmission des vibrations à l'objet A. Plus précisément, les fluctuations de l'épaisseur ou de raideur du dispositif d'amortissement 50, obtenues en régulant l'intensité du champ électrique traversant le bloc de polymère électro-actif, peuvent être engendrées de manière à être en opposition de phase avec les vibrations de l'objet B, limitant ainsi la transmission de ces vibrations à l'objet A pour le cas de fréquences faibles. Une autre possibilité est d'utiliser le polymère en tant que filtre mécanique en modifiant sa raideur. L'agencement adapté permet d'obtenir des filtres à plusieurs bandes de spectre variables.

Ainsi, en ajustant l'intensité de la tension alimentant le dispositif d'amortissement 50, il est possible d'adapter précisément les variations d'épaisseur ou de raideur du dispositif d'amortissement 50 en fonction de la fréquence des vibrations engendrées dans la chambre de combustion, et de limiter la transmission de ces vibrations à la structure de la fusée ou du satellite.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Notamment, davantage d'actionneurs peuvent être disposés en parallèle ou en série, avec deux bras d'orientation articulés entre eux. De plus, pour chaque mode de réalisation présenté, un nombre différent d'actionneurs peut être envisagé. En outre, les modes de réalisation sont décrits ci-dessus dans le cas d'un propulseur chimique comportant une chambre de combustion et un divergent. Néanmoins, ces exemples peuvent être transposés au cas d'un propulseur électrique de type plasmique ou ionique, en remplaçant dans la description la chambre de combustion du propulseur chimique par la chambre d'ionisation du propulseur électrique, et le divergent par les deux grilles chargées négativement et positivement. Par conséquent, la description et les dessins doivent être considérés dans un sens illustratif plutôt que restrictif.

## Revendications

1. Ensemble comportant :
- un support (10) configuré pour être fixé à un engin spatial,
- un propulseur,
- un dispositif d'amortissement (50), **caractérisé en ce que** le dispositif d'amortissement (50) comporte au moins deux électrodes (50b) et au moins un polymère électro-actif (50a) disposé entre les deux électrodes (50b), le dispositif d'amortissement (50) étant intercalé entre le support (10) et le propulseur.

2. Ensemble selon la revendication 1, dans lequel le propulseur est de type chimique, comportant :
- Une chambre de combustion (20) portée par le support (10),
- Un divergent (30) fixé à la chambre de combustion (20) en aval de la chambre de combustion (20).

3. Ensemble selon la revendication 1, dans lequel le propulseur est de type électrique.

4. Ensemble selon l'une quelconque des revendications 1 à 3, dans lequel le dispositif d'amortissement (50) comporte trois électrodes (50b) et deux polymères électro-actifs (50a) empilés les uns sur les autres, de sorte que chaque polymère électro-actif (50a) soit intercalé entre deux électrodes (50b).

5. Ensemble selon l'une quelconque des revendications 1 à 4, dans lequel les électrodes (50b) sont alimentées électriquement indépendamment les unes des autres.

6. Ensemble selon la revendication 5, dans lequel l'intensité du champ électrique appliqué au dispositif d'amortissement (50) est modulable.

7. Ensemble selon l'une quelconque des revendications 1 à 6, l'épaisseur du au moins un polymère électro-actif (50a) est uniforme.

8. Ensemble selon l'une quelconque des revendications 1 à 7, dans lequel le dispositif d'amortissement (50) comporte une première surface de liaison et dans lequel le propulseur comporte une deuxième surface de liaison, la première et la deuxième surface de liaison étant en regard l'une par rapport à l'autre, la première surface de liaison étant supérieure ou égale à la deuxième surface de liaison.

9. Ensemble selon l'une quelconque des revendications 1 à 8, configuré pour être utilisé sur des moteurs fusée de poussée comprise entre 0.001 N et 500 N.

10. Fusée comportant un ensemble selon l'une quelconque des revendications précédentes.

## Patentansprüche

1. Anordnung, umfassend:
- einen Träger (10), der dafür ausgelegt ist, um an einem Raumfahrzeug befestigt zu werden,
- ein Triebwerk,
- eine Dämpfungsvorrichtung (50), **dadurch gekennzeichnet, dass** die Dämpfungsvorrichtung (50) mindestens zwei Elektroden (50b) und mindestens ein elektroaktives Polymer (50a) umfasst, das zwischen den beiden Elektroden (50b) angeordnet ist, wobei die Dämpfungsvorrichtung (50) zwischen dem Träger (10) und dem Triebwerk eingefügt ist.

2. Anordnung nach Anspruch 1, wobei das Triebwerk vom chemischen Typ ist, umfassend:
- eine Verbrennungskammer (20), die von dem Träger (10) getragen wird,
- eine Divergiereinrichtung (30), die an der Verbrennungskammer (20) stromabwärts von der Verbrennungskammer (20) befestigt ist.

3. Anordnung nach Anspruch 1, wobei das Triebwerk vom elektrischen Typ ist.

4. Anordnung nach einem der Ansprüche 1 bis 3, wobei die Dämpfungsvorrichtung (50) drei Elektroden (50b) und zwei elektroaktive Polymere (50a) umfasst, die derart übereinander gestapelt sind, dass das elektroaktive Polymer (50a) zwischen den beiden Elektroden (50b) eingefügt ist.

5. Anordnung nach einem der Ansprüche 1 bis 4, wobei Elektroden (50b) unabhängig voneinander elektrisch betrieben werden.

6. Anordnung nach Anspruch 5, wobei die Intensität des elektrischen Felds, das an die Dämpfungsvorrichtung (50) angelegt wird, modulierbar ist.

7. Anordnung nach einem der Ansprüche 1 bis 6, wobei die Dicke des mindestens einen elektroaktiven Polymers (50a) gleichmäßig ist.

8. Anordnung nach einem der Ansprüche 1 bis 7, wobei die Dämpfungsvorrichtung (50) eine erste Verbindungsfläche umfasst, und wobei das Triebwerk eine zweite Verbindungsfläche umfasst, wobei die erste und die zweite Verbindungsfläche einander gegenüberliegen, wobei die erste Verbindungsfläche größer als die zweite oder gleich der zweiten Verbindungsfläche ist.

9. Anordnung nach einem der Ansprüche 1 bis 8, welche dafür ausgelegt ist, um bei Raketentriebwerken mit einem Schubantrieb zwischen 0,001 N und 500 N verwendet zu werden.

10. Rakete, umfassend eine Anordnung nach einem der vorhergehenden Ansprüche.

## Claims

1. An assembly comprising:
- a mount (10) configured to be attached to a spacecraft,
- a thruster,
- a damping device (50), **characterized in that** the damping device (50) comprises at least two electrodes (50b) and at least one electroactive polymer (50a) disposed between the two electrodes (50b), the damping device (50) being interposed between the mount (10) and the thruster.

2. The assembly as claimed in claim 1, wherein the thruster is of the chemical type, comprising:
- a combustion chamber (20) carried by the mount (10),
- a divergent (30) attached to the combustion chamber (20) downstream of the combustion chamber (20).

3. The assembly as claimed in claim 1, wherein the thruster is of the electrical type.

4. The assembly as claimed in any one of claims 1 to 3, wherein the damping device (50) comprises three electrodes (50b) and two electroactive polymers (50a) stacked on top of each other, such that each electroactive polymer (50a) is interposed between two electrodes (50b).

5. The assembly as claimed in any one of claims 1 to 4, wherein the electrodes (50b) are electrically powered independently of each other.

6. The assembly as claimed in claim 5, wherein the intensity of the electric field applied to the damping device (50) is adjustable.

7. The assembly as claimed in any one of claims 1 to 6, the thickness of the at least one electroactive polymer (50a) is uniform.

8. The assembly as claimed in any one of claims 1 to 7, wherein the damping device (50) comprises a first bonding surface and wherein the thruster comprises a second bonding surface, the first and second bonding surfaces facing each other, the first bonding surface being greater than or equal to the second bonding surface.

9. The assembly as claimed in any one of claims 1 to 8, configured for use on rocket engines with thrust comprised between 0.001 N and 500 N.

10. A rocket comprising an assembly as claimed in any one of the preceding claims.
